# EUROPEAN PATENT APPLICATION

(11) **EP 4 625 634 A1**
(43) Date of publication of application: **01.10.2025**
(21) Application number: 25165482.8
(22) Date of filing: 21.03.2025
(51) Int. Cl.: H01M 50/164, H01M 50/188, H01M 50/593

(54) **END CAP ASSEMBLY, BATTERY APPARATUS, AND POWER CONSUMPTION DEVICE**

(30) Priority: 25.03.2024 CN 202420599416 U
(71) Applicant: BYD Company Limited, Shenzhen, Guangdong 518118 (CN)
(72) Inventor: WANG, Bin, Shenzhen 518118 (CN); YANG, Qingming, Shenzhen 518118 (CN); HUANG, Xiaoyan, Shenzhen 518118 (CN)
(74) Representative: Taor, Simon Edward William

(57) **Abstract**

An end cap assembly, a battery apparatus, and a power consumption device are provided. The end cap assembly includes a cover plate, an adhesive member, and an insulation member. The cover plate is provided with a first mounting hole. The adhesive member is bonded to the cover plate. The adhesive member is provided with a second mounting hole. The second mounting hole corresponds to the first mounting hole. The insulation member is disposed on a side of the cover plate facing away from the adhesive member. The insulation member is provided with a third mounting hole. The third mounting hole corresponds to the first mounting hole. A thickness of the adhesive member is H1 and a thickness of the insulation member is H2, satisfying the following: H1<H2. Through the foregoing arrangement, connection reliability of the end cap assembly is improved, and a risk of falling off during manufacturing and use is reduced.

## Description

### FIELD

The present disclosure relates to the field of battery technologies, and specifically, to an end cap assembly, a battery apparatus, and a power consumption device.

### BACKGROUND

An existing cover plate structure is mainly manufactured by injecting an injection molding part onto a cover plate, and then mounting a terminal and a connecting sheet. The existing cover plate structure has poor connection reliability, and has a risk of falling off during manufacturing and use.

### SUMMARY

An objective of the present disclosure is to provide an end cap assembly, a battery apparatus, and a power consumption device, to resolve the problems of poor connection reliability of a cover plate structure and a risk of falling off during manufacturing and use.

To achieve the objective of the present disclosure, the present disclosure provides the following technical solutions:

According to a first aspect, the present disclosure provides an end cap assembly, including a cover plate, an adhesive member, and an insulation member. The cover plate is provided with a first mounting hole. The adhesive member is bonded to the cover plate. The adhesive member being provided with a second mounting hole. The second mounting hole corresponds to the first mounting hole. The insulation member is disposed on a side of the cover plate facing away from the adhesive member. The insulation member is provided with a third mounting hole. The third mounting hole corresponds to the first mounting hole. A thickness of the adhesive member is H1, and a thickness of the insulation member is H2, satisfying the following: H1<H2.

In an implementation, the following is further satisfied: H2≤3H1.

In an implementation, the cover plate includes a first surface and a second surface facing away from each other. The first mounting hole runs through the first surface and the second surface. The adhesive member is disposed on the first surface. The insulation member includes a plate body and a cylinder body. An end of the cylinder body is connected to the plate body. The third mounting hole runs through the cylinder body and the plate body. The plate body is disposed on the second surface. The cylinder body extends into the first mounting hole.

In an implementation, the end cap assembly further includes a terminal. The terminal includes a disc body and a column body. An end of the column body is connected to the disc body. The column body passes through the first mounting hole, the second mounting hole, and the third mounting hole. The disc body is bonded to a surface of the adhesive member facing away from the cover plate.

In an implementation, at a same position in a radial direction of the first mounting hole, an outer peripheral edge of the adhesive member is flush with an outer peripheral edge of the disc body, or the adhesive member protrudes from the outer peripheral edge of the disc body.

In an implementation, in a radial direction of the first mounting hole, a minimum dimension of the disc body is larger than a maximum dimension of the first mounting hole, the maximum dimension of the first mounting hole is larger than or equal to a maximum dimension of the cylinder body, the maximum dimension of the cylinder body is larger than a maximum dimension of the third mounting hole, and the maximum dimension of the third mounting hole is larger than or equal to a maximum dimension of the column body.

In an implementation, in a radial direction of the first mounting hole, a maximum dimension of the first mounting hole is larger than a maximum dimension of the second mounting hole, and the maximum dimension of the second mounting hole is larger than or equal to a maximum dimension of the column body.

In an implementation, the end cap assembly further includes a connecting sheet. The connecting sheet is disposed on a side of the insulation member facing away from the cover plate. An end of the column body away from the disc body is connected to the connecting sheet. At a same position in a radial direction of the first mounting hole, an outer peripheral edge of the plate body protrudes from an outer peripheral edge of the connecting sheet.

In an implementation, the insulation member further includes a limiting structure. The limiting structure is disposed on a surface of the plate body facing away from the cylinder body, and the connecting sheet is disposed in a space enclosed by the limiting structure.

In an implementation, the insulation member further includes an anti-rotation post. The anti-rotation post is disposed on the plate body and disposed spaced away from the cylinder body. The cylinder body and the anti-rotation post are located on a same side of the plate body. The second surface is provided with a limiting groove. The anti-rotation post extends into the limiting groove.

In an implementation, the adhesive member is any one of a polypropylene adhesive member, a polyethersulfone adhesive member, or a polyamide adhesive member, and the insulation member is any one of a polypropylene insulation member, a polycarbonate insulation member, a polyethylene insulation member, or a polystyrene insulation member.

According to a second aspect, the present disclosure provides a battery apparatus, including a housing, a battery core, and the end cap assembly according to any one of various implementations of the first aspect. The housing includes an accommodating cavity. The battery core is accommodated in the accommodating cavity. The end cap assembly is connected to the housing and closes the accommodating cavity. The battery core is electrically connected to the connecting sheet of the end cap assembly.

According to a third aspect, the present disclosure further provides a power consumption device, including a power consumption apparatus and the battery apparatus according to the second aspect. The battery apparatus supplies power to the power consumption apparatus.

By providing the adhesive member and the insulation member, the adhesive member is bonded and fixed to the cover plate, and is configured to be bonded and fixed to the terminal, so that the terminal and the cover plate are connected and fixed to each other and are sealed, satisfying H1<H2. In this way, the adhesive member can be made thinner than the insulation member, which is beneficial to reducing a thickness dimension of the end cap assembly. Compared with a conventional cover plate structure, the end cap assembly has the connection reliability improved and the risk of falling off during manufacturing and use reduced.

### BRIEF DESCRIPTION OF THE DRAWINGS

To describe the technical solutions in the implementations of the present disclosure or the related art more clearly, the following briefly describes the accompanying drawings required for describing the implementations or the related art. Apparently, the accompanying drawings in the following description show only some implementations of the present disclosure, and a person of ordinary skill in the art may still derive other accompanying drawings from these accompanying drawings without creative efforts.
FIG. 1 is a three-dimensional diagram of an end cap assembly according to an embodiment;
FIG. 2 is an exploded view of an end cap assembly according to an embodiment;
FIG. 3 is a cross-sectional view of an end cap assembly according to an embodiment; and
FIG. 4 is a bottom view of an end cap assembly according to an embodiment.

In the drawings:
10-cover plate, 11-first mounting hole, 12-first surface, 13-second surface, 14-limiting groove, 15-solution filling hole;
20-adhesive member, 21-second mounting hole;
30-insulation member, 31-third mounting hole, 32-plate body, 33-cylinder body, 34-limiting structure, 341-first limiting block, 342-second limiting block, 343-third limiting block, 35-anti-rotation post;
40-connecting sheet, 41-fourth mounting hole;
50-terminal, 51-disc body, 52-column body.

### DETAILED DESCRIPTION

The technical solutions in the implementations of the present disclosure are clearly and completely described below with reference to the accompanying drawings in the implementations of the present disclosure. Apparently, the described implementations are merely some rather than all of the implementations of the present disclosure. All other implementations obtained by a person of ordinary skill in the art based on the implementations of the present disclosure without creative efforts shall fall within the protection scope of the present disclosure.

It should be noted that, when a component is referred to as "being fixed to" another component, the component may be directly on the another component, or an intervening component may exist When a component is considered to be "connected to" another component, the component may be directly connected to the another component, or an intervening component may exist.

Unless otherwise defined, meanings of all technical and scientific terms used in the present disclosure are the same as those usually understood by a person skilled in the art to which the present disclosure belongs. Terms used in the specification of the present disclosure are merely used for describing specific embodiments, and are not intended to limit the present disclosure. The term "and/or" used in the present disclosure includes any and all combinations of one or more related listed items.

Some implementations of the present disclosure are described below in detail with reference to the accompanying drawings. In a case that no conflict occurs, the following embodiments and features in the embodiments may be mutually combined.

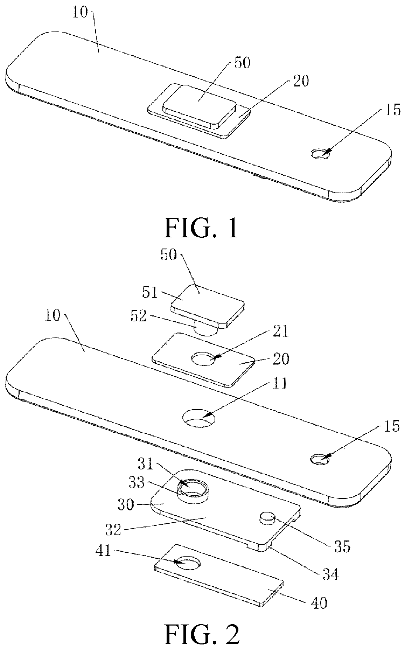

Referring to FIG. 1 to FIG. 3, an embodiment of the present disclosure provides an end cap assembly, including a cover plate 10, an adhesive member 20, an insulation member 30, a connecting sheet 40, and a terminal 50.

The cover plate 10 may be made of a material with high structural strength such as an iron alloy, an aluminum alloy, or a magnesium alloy, and is used as a mounting base of the adhesive member 20, the insulation member 30, the connecting sheet 40, and the terminal 50, to be connected and fixed to a housing of a battery apparatus. The cover plate 10 is provided with a first mounting hole 11. Optionally, the cover plate 10 is plate-shaped, and includes a first surface 12 and a second surface 13 facing away from each other. The first mounting hole 11 runs through the first surface 12 and the second surface 13. The first surface 12 and the second surface 13 may each be a flat surface or a curved surface, or one of the first surface 12 and the second surface 13 is a flat surface, and the other thereof is a curved surface, and so on. This is not limited. An overall shape of the cover plate 10 (that is, a shape of the first surface 12 or the second surface 13) may be roughly a rectangle, a square, a diamond, an ellipse, a circle, or the like. This is not limited. Optionally, the cover plate 10 has a rectangular overall shape with adjacent side surfaces smoothly transitioned, to be mounted to a battery with a square housing. Optionally, the cover plate 10 has a circular overall shape, to be mounted to a cylindrical battery. In addition to the first mounting hole 11, any other feasible structure can be provided on the cover plate 10. As shown in FIG. 1 and FIG. 2, the cover plate 10 is further provided with a solution filling hole 15. The solution filling hole 15 is configured to fill an electrolyte into the battery apparatus. None of the other structures is limited in this embodiment of the present disclosure.

A thickness of the cover plate 10 (that is, a distance between the first surface 12 and the second surface 13) is greater than or equal to 0.05 mm, to satisfy a requirement for sufficient strength. According to different shapes of the cover plate 10, a length, a width, a major axis, a minor axis, a diameter, or the like of the cover plate 10 needs to be greater than or equal to 2 mm, to satisfy a connection requirement of the housing of the battery apparatus and a dimension requirement for providing the first mounting hole 11. A shape (that is, a cross-sectional shape) of the first mounting hole 11 may be a circle, a square, an ellipse, or the like. This is not limited. A length, a width, a major axis, a minor axis, a diameter, or the like of the first mounting hole 11 needs to be greater than or equal to 0.05 mm, to satisfy a requirement for mounting another element.

A material of the adhesive member 20 may be a hot melt adhesive or a thermoplastic adhesive. Specifically, the material of the adhesive member 20 is any one of a polypropylene (PP), polyethersulfone (PES), polyamide (PA), or the like. To be specific, the adhesive member 20 is any one of a polypropylene adhesive member, a polyethersulfone adhesive member, or a polyamide adhesive member, and can be bonded and fixed to the cover plate 10 by heating. The adhesive member 20 is bonded to the cover plate 10. The adhesive member 20 is provided with a second mounting hole 21. The second mounting hole 21 corresponds to the first mounting hole 11. Optionally, the adhesive member 20 is a membrane-like structure, disposed on the first surface 12 of the cover plate 10, and the adhesive member 20 is bonded and fixed to the cover plate 10.

Optionally, a thickness of the adhesive member 20 is H1, and H1≥0.05 mm, to satisfy insulation and sealing requirements. The second mounting hole 21 is a through hole running along a thickness direction of the adhesive member 20. A shape of the second mounting hole 21 may be the same as or different from that of the first mounting hole 11. This is not limited.

An insulation member 30 is disposed on a side of the cover plate 10 facing away from the adhesive member 20. The insulation member 30 is provided with a third mounting hole 31. The third mounting hole 31 corresponds to the first mounting hole 11. The insulation member 30 is made of an insulation material, and is configured to separate the connecting sheet 40 and the cover plate 10 to insulate them. The insulation member 30 is further configured to separate the terminal 50 and the cover plate 10 to insulate them.

Optionally, a material of the insulation member 30 may be any one of polypropylene (PP), polycarbonate (PC), polyethylene (PE), polystyrene (PS), or the like. To be specific, the insulation member 30 is any one of a polypropylene insulation member, a polycarbonate insulation member, a polyethylene insulation member, or a polystyrene insulation member. The insulation member 30 may be formed by injection molding. Manufacturing the insulation member 30 by injection molding leads to a simple process. The insulation member 30 may alternatively be of another material and formed by another process. This is not limited. A specific shape and a specific structure of the insulation member 30 are not limited. The insulation member 30 may be partially or entirely disposed on the second surface 13 of the cover plate 10, to surface away from the adhesive member 20 disposed on the first surface 12.

Optionally, a thickness (that is, a maximum dimension of the cover plate 10 perpendicular to the second surface 13) of the insulation member 30 is H2, where H2≥0.2 mm, to satisfy structural strength and insulation requirements.

Optionally, the adhesive member 20 and the insulation member 30 further satisfy: H1<H2. The insulation member 30 is obtained by injection molding, and a minimum thickness of the insulation member 30 during injection molding cannot be excessively small, to prevent breakage during demolding. The breakage problem does not need to be considered for the adhesive member 20. Therefore, compared with a conventional manner of using injection molding parts on two sides of the cover plate 10, setting H1<H2 can reduce a thickness of the end cap assembly.

Further, the adhesive member 20 and the insulation member 30 further satisfy: H2≤3H1. Considering that the adhesive member 20 cannot be excessively thin, to prevent the terminal 50 from passing through the adhesive member 20 and coming into contact with the cover plate 10, to cause the cover plate 10 to carry charges abnormally, and the insulation member 30 cannot be excessively thick, to avoid an excessively large thickness of the end cap assembly, setting H1<H2≤3H1 can better satisfy requirements of an insulation and isolation function, structural strength, and thickness.

The third mounting hole 31 is a through hole running along a thickness direction of the insulation member 30 (that is, a direction perpendicular to the second surface 13 of the cover plate 10). A shape of the third mounting hole 31 may be the same as or different from that of the first mounting hole 11. This is not limited. A dimension of the third mounting hole 31 is smaller than a dimension of the first mounting hole 11. Using an example in which the first mounting hole 11 and the third mounting hole 31 are each a circular hole, an aperture of the third mounting hole 31 is smaller than that of the first mounting hole 11, and the third mounting hole 31 is entirely located in a space of the first mounting hole 11. After the terminal 50 passes through the third mounting hole 31, an inner wall of the third mounting hole 31 can limit a position of the terminal 50, so that there is a gap between the terminal 50 and an inner wall of the first mounting hole 11, to avoid electrical abnormality of the cover plate 10 caused by the terminal 50 being in contact with the cover plate 10.

The connecting sheet 40 is disposed on a side of the insulation member 30 facing away from the cover plate 10. The connecting sheet 40 is roughly a sheet-shaped structure and made of a conductive material, which may be specifically aluminum, copper, or the like. This is not limited. The connecting sheet 40 is configured to weld a tab on a battery core of the battery apparatus, and is connected to the terminal 50, to achieve an electrical connection between the battery core and the terminal 50. Optionally, a thickness of the connecting sheet 40 is greater than or equal to 0.1 mm, to satisfy a requirement for an electrical connection.

The terminal 50 includes a disc body 51 and a column body 52. An end of the column body 52 is connected to the disc body 51. The disc body 51 is roughly plate-shaped, and the column body 52 is roughly column-shaped. An end surface of the column body 52 is connected to a middle of a disc surface of the disc body 51. Optionally, the terminal 50 is an integrated structure. In other words, the disc body 51 and the column body 52 are an integrated structure, which may be manufactured by an integrated molding process. The disc body 51 is larger than the column body 52. To be specific, an orthographic projection of the column body 52 on the disc surface of the disc body 51 is entirely located on the disc body 51, and the disc body 51 at least partially exceeds an orthographic projection region of the column body 52. The terminal 50 is made of a conductive material, which may be specifically aluminum, copper, or the like. This is not limited.

The column body 52 passes through the first mounting hole 11, the second mounting hole 21, and the third mounting hole 31. The disc body 51 is bonded to a surface of the adhesive member 20 facing away from the cover plate 10. An end of the column body 52 away from the disc body 51 is connected to the connecting sheet 40. The disc body 51 is bonded and fixed to the adhesive member 20, so that the cover plate 10, the adhesive member 20, and the terminal 50 are fixed together to maintain stability of the structure. Specifically, the disc body 51 may be bonded and fixed to the adhesive member 20 by hot pressing. Optionally, an end surface of the end of the column body 52 away from the disc body 51 is connected and fixed, by welding or bonding, to a surface of the connecting sheet 40 on a side facing the cover plate 10 along a thickness direction. Optionally, the connecting sheet 40 is provided with a fourth mounting hole 41. The column body 52 passes through the fourth mounting hole 41. An outer peripheral surface of the column body 52 is connected and fixed to an inner wall of the fourth mounting hole 41 by welding, bonding, or the like.

A method for mounting an end cap assembly in this embodiment of the present disclosure is as follows: The adhesive member 20 is mounted, and the adhesive member 20 is mounted on the cover plate 10 by a hot pressing process. The terminal 50 is mounted, the column body 52 of the terminal 50 sequentially is caused to pass through the second mounting hole 21 and the first mounting hole 11, and the disc body 51 is caused to come into contact with the adhesive member 20. Then, the disc body 51 is bonded and fixed to the adhesive member 20 by a hot pressing process. The insulation member 30 is assembled, the insulation member 30 is disposed on a side of the cover plate 10 facing away from the adhesive member 20, and the column body 52 is caused to pass through the third mounting hole 31 of the insulation member 30. The connecting sheet 40 is disposed on a side of the insulation member 30 facing away from the cover plate 10, and the connecting sheet 40 is welded and fixed to the column body 52.

At present, a conventional method for mounting a cover plate structure is as follows: An injection molding part is injection molded on the cover plate 10, and then the terminal 50 and the connecting sheet 40 are mounted. There is no connection relationship among the terminal 50, the connecting sheet 40, and the injection molding part, and connection reliability is poor. The terminal 50 and the connecting sheet 40 are susceptible to disengagement from the injection molding part and the cover plate 10.

In addition, a thickness of the injection molding part cannot be made small, resulting in a large overall thickness of the end cap assembly. Since a length of the terminal 50 is limited, a connection between the terminal 50 and the connecting sheet 40 is prone to fail. Even if the connection succeeds, strength thereof is insufficient, resulting in a risk of disengagement between the connecting sheet 40 and the terminal 50.

At present, to satisfy requirements of sealing, insulation, and resistance to corrosion by the electrolyte, an injection molding part of a conventional cover plate structure needs to made of a perfluoroethylene-polyfluoroalkoxy (PFA) material. It has been studied that the material has adverse effects the ecological environment and human health, and some organizations have planned to ban the material. At present, there is no material that can replace such an injection molding part. Therefore, a structure and a manufacturing process of the cover plate structure need to be redesigned.

In the embodiments of the present disclosure, by providing the adhesive member 20 and the insulation member 30, the adhesive member 20 is bonded and fixed to the cover plate 10, and is configured to be bonded and fixed to the terminal 50, so that the terminal 50 and the cover plate 10 are connected and fixed to each other and sealed, satisfying H1<H2. In this way, the adhesive member 20 can be made thinner than the insulation member 30, which is beneficial to reducing a thickness dimension of the end cap assembly. Compared with a conventional cover plate structure, the end cap assembly has the connection reliability improved and the risk of falling off during manufacturing and use reduced.

The thickness of the adhesive member 20 can be made smaller. Compared with a conventional design in which the terminal 50 is insulated from the first surface 12 of the cover plate 10 by the injection molding part, the present disclosure can reduce the overall thickness of the end cap assembly, achieving a reliable connection between the terminal 50 with a limited length and the connecting sheet 40, and reduce a risk of disengagement between the connecting sheet 40 and the terminal 50.

In the embodiments of the present disclosure, an existing injection molding part made of a PFA material is replaced with the adhesive member 20 plus the insulation member 30. The adhesive member 20 can satisfy the sealing and insulation requirements, and the insulation member 30 can satisfy a requirement for resistance to corrosion by the electrolyte, so that the injection molding part made of the PFA material is perfectly replaced.

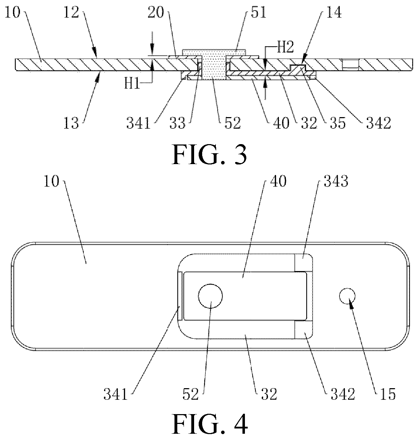

In an embodiment, referring to FIG. 2 and FIG. 3, a cover plate 10 includes a first surface 12 and a second surface 13 facing away from each other. An adhesive member 20 is disposed on the first surface 12. An insulation member 30 includes a plate body 32 and a cylinder body 33. An end of the cylinder body 33 is connected to the plate body 32. A third mounting hole 31 runs through the cylinder body 33 and the plate body 32. The plate body 32 is disposed on the second surface 13. The cylinder body 33 extends into a first mounting hole 11.

The plate body 32 is roughly plate-shaped. A shape of the plate body 32 is roughly adapted to the cover plate 10. The plate body 32 also includes two opposite surfaces, one of which snugly fits the second surface 13. The cylinder body 33 is disposed on the surface of the plate body 32 snugly fitting the second surface 13. A shape of an outer peripheral surface of the cylinder body 33 is roughly adapted to the first mounting hole 11. The outer peripheral surface of the cylinder body 33 may snugly fit an inner peripheral wall of the first mounting hole 11, or there may be a small gap. A shape of an inner peripheral surface of the cylinder body 33 (that is, a side wall of the third mounting hole 31) is roughly adapted to the column body 52, so that the column body 52 snugly fits the third mounting hole 31 after passing through the third mounting hole 31, or there may be a small gap. Optionally, the plate body 32 and the cylinder body 33 are an integrated structure. For example, the insulation member 30 is formed by an injection molding process, so that the plate body 32 and the cylinder body 33 are integrated. Optionally, the plate body 32 and the cylinder body 33 may be split structures, connected to form an integrated body in any feasible manner. This is not specifically limited. The third mounting hole 31 runs through the cylinder body 33 and the plate body 32, so that the column body 52 of the terminal 50 passing through the third mounting hole 31 can extend from a side of the first surface 12 and out of a side of the second surface 13. The cylinder body 33 plays a role of isolating the column body 52 from a side wall of the first mounting hole 11, to prevent the column body 52 from being electrically connected to the cover plate 10. The connecting sheet 40 is disposed on a side of the plate body 32 facing away from the cover plate 10. The plate body 32 plays a role of isolating the connecting sheet 40 from the cover plate 10, to prevent the connecting sheet 40 from being electrically connected to the cover plate 10. In this way, insulation requirements are satisfied. Optionally, a height by which the cylinder body 33 protrudes from the plate body 32 is smaller than or equal to a thickness of the cover plate 10, so that the cylinder body 33 does not interfere with the adhesive member 20 and the disc body 51 of the terminal 50. A thickness of the plate body 32 is H2.

Optionally, referring to FIG. 1 to FIG. 3, at a same position in a radial direction of the first mounting hole 11, an outer peripheral edge of the adhesive member 20 is flush with an outer peripheral edge of the disc body 51, or the adhesive member 20 protrudes from the outer peripheral edge of the disc body 51. The radial direction of the first mounting hole 11 refers to a radial direction of a circular hole when the first mounting hole 11 is fitted into the circular hole.

In other words, a total area enclosed by an outer peripheral edge of an orthographic projection of the adhesive member 20 on the first surface 12 is larger than an area of an orthographic projection of the disc body 51 on the first surface 12, and the orthographic projection of the disc body 51 on the first surface 12 is entirely located in a space enclosed by the outer peripheral edge of the orthographic projection of the adhesive member 20 on the first surface 12.

the adhesive member 20 has a small thickness, and the outer peripheral edge thereof is connected to a surface of the adhesive member 20 bonded to the cover plate 10 and a surface facing away from the cover plate 10. The adhesive member 20 is further provided with a second mounting hole 21, so that the adhesive member 20 further has an inner peripheral edge. The inner peripheral edge is connected to the surface of the adhesive member 20 bonded to the cover plate 10 and the surface facing away from the cover plate 10. At least one of the outer peripheral edge of the adhesive member 20 is located outside the outer peripheral edge of the disc body 51 at the same position (that is, the same position in the radial direction of the first mounting hole 11), and no outer peripheral edge of the adhesive member 20 is located inside the outer peripheral edge of the disc body 51 at the same position. Specifically, using an example in which the orthographic projections of the adhesive member 20 and the disc body 51 on the first surface 12 are each a rectangle, four edges of the orthographic projection of the adhesive member 20 may be in a one-to-one correspondence with four edges of the orthographic projection of the disc body 51. One, two, three, or four edges in the four edges of the orthographic projection of the adhesive member 20 may be located outside corresponding one, two, three, or four edges in the four edges of the orthographic projection of the disc body 51. Except for being located outside corresponding edges of the orthographic projection of the disc body 51, the remaining edges of the orthographic projection of the adhesive member 20 may coincide with the corresponding edges of the orthographic projection of the disc body 51. In this way, the disc body 51 and the first surface 12 are completely separated by the adhesive member 20, to satisfy insulation performance. In addition, since the adhesive member 20 is bonded and fixed to each of the cover plate 10 and the disc body 51, a gap between the adhesive member 20 and the first surface 12 or the disc body 51 is zero. In this way, even if the electrolyte or a gas leaking into the first mounting hole 11, the electrolyte or the gas does not leak through the gap between the adhesive member 20 and the first surface 12 or the disc body 51, which satisfies sealing performance.

Optionally, referring to FIG. 1 to FIG. 3, in the radial direction of the first mounting hole 11, a minimum dimension of the disc body 51 is larger than a maximum dimension of the first mounting hole 11, the maximum dimension of the first mounting hole 11 is larger than or equal to a maximum dimension of the cylinder body 3, the maximum dimension of the cylinder body 33 is larger than a maximum dimension of the third mounting hole 31, and the maximum dimension of the third mounting hole 31 is larger than or equal to a maximum dimension of the column body 52.

Specifically, in the radial direction of the first mounting hole 11 (refer to the foregoing description of the radial direction, and details are not described herein again), the disc body 51 may have different dimensions depending on a shape of the disc body 51. For example, when the disc body 51 is a rectangular flat plate structure, a minimum dimension of the disc body 51 may be a width. For another example, when the disc body 51 is a disc structure, a minimum dimension of the disc body 51 is a diameter. The same definition applies to the first mounting hole 11, the second mounting hole 21, the third mounting hole 31, the cylinder body 33, and the column body 52. In short, each dimension in this embodiment refers to a dimension in the radial direction of the first mounting hole 11.

If that the minimum dimension of the disc body 51 is larger than the maximum dimension of the first mounting hole 11 is satisfied, the disc body 51 can be prevented from falling into the first mounting hole 11, thereby ensuring that the disc body 51 is at least partially bonded to the first surface 12 of the cover plate 10 by the adhesive member 20, satisfying mounting and fixing requirements. If that the maximum dimension of the first mounting hole 11 is larger than or equal to the maximum dimension of the cylinder body 33 is satisfied, the cylinder body 33 can extend into the first mounting hole 11, to implement a function of separating the column body 52 from the cover plate 10. If that the maximum dimension of the cylinder body 33 is larger than the maximum dimension of the third mounting hole 31 is satisfied, the cylinder body 33 has a specific thickness, which plays a role in separating the column body 52 from the cover plate 10. If that the maximum dimension of the third mounting hole 31 is larger than or equal to the maximum dimension of the column body 52 is satisfied, the column body 52 can pass through the third mounting hole 31, thereby connecting to the connecting sheet 40 and satisfying a mounting requirement.

Optionally, referring to FIG. 2 and FIG. 3, the maximum dimension of the first mounting hole 11 is larger than the maximum dimension of the second mounting hole 21, and the maximum dimension of the second mounting hole 21 is larger than or equal to the maximum dimension of the column body 52. If that the maximum dimension of the first mounting hole 11 is larger than the maximum dimension of the second mounting hole 21 is satisfied, the adhesive member 20 at least partially extends into the space of the first mounting hole 11, thereby ensuring that the disc body 51 and the cover plate 10 are not directly surface to surface, and avoiding electrical conduction caused by an excessively small distance and no separation by the adhesive member 20. If that the maximum dimension of the second mounting hole 21 is larger than or equal to the maximum dimension of the column body 52 is satisfied, the column body 52 can pass through the second mounting hole 21, thereby satisfying mounting and fixing requirements.

Optionally, referring to FIG. 2 to FIG. 4, at the same position in the radial direction of the first mounting hole 11, an outer peripheral edge of the plate body 32 protrudes from an outer peripheral edge of the connecting sheet 40.

In other words, a total area enclosed by an outer peripheral edge of an orthographic projection of the plate body 32 on the second surface 13 is larger than a total area enclosed by an outer peripheral edge of an orthographic projection of the connecting sheet 40 on the second surface 13, and the orthographic projection of the connecting sheet 40 on the second surface 13 is entirely located in a space enclosed by the outer peripheral edge of the orthographic projection of the plate body 32 on the second surface 13.

Similar to the foregoing relationship between the outer peripheral edge of the adhesive member 20 and the outer peripheral edge of the disc body 51, a relationship between the plate body 32 and the connecting sheet 40 is set, to ensure that the insulation performance between the connecting sheet 40 and the cover plate 10 satisfies the requirement. Details are not described herein again.

Optionally, the insulation member 30 further includes a limiting structure 34. The limiting structure 34 is disposed on a surface of the plate body 32 facing away from the cylinder body 33. The connecting sheet 40 is disposed in a space enclosed by the limiting structure 34.

A specific structure of the limiting structure 34 is not limited, and the limiting structure 34 is configured to position and limit the connecting sheet 40, to prevent the connecting sheet 40 from translating or rotating, thereby ensuring stability of the structure after mounting and enhancing reliability. The limiting structure 34 and the plate body 32 may be an integrated structure or split structures. This is not limited.

For example, the limiting structure 34 includes a first limiting block 341, a second limiting block 342, and a third limiting block 343. The first limiting block 341 is disposed at one end of the plate body 32 in a length direction, the second limiting block 342 and the third limiting block 343 are disposed at an other end of the plate body 32 in the length direction, and the second limiting block 342 and the third limiting block 343 are disposed spaced away in a width direction of the plate body 32. One end of the connecting sheet 40 is directly opposite to the first limiting block 341 and has a small gap from the first limiting block 341. An other end of the connecting sheet 40 extends into a space between the second limiting block 342 and the third limiting block 343. The first limiting block 341 can limit movement of the connecting sheet 40 in a length direction of the first limiting block 341. The second limiting block 342 and the third limiting block 343 can limit rotation of the connecting sheet 40 around the column body 52, thereby ensuring that the position of the connecting sheet 40 is limited and improving reliability.

Optionally, referring to FIG. 2 and FIG. 3, the insulation member 30 further includes an anti-rotation post 35. The anti-rotation post 35 is disposed on the plate body 32 and disposed spaced away from the cylinder body 33. The cylinder body 33 and the anti-rotation post 35 are located on a same side of the plate body 32. The second surface 13 is provided with a limiting groove 14. The anti-rotation post 35 extends into the limiting groove 14.

The anti-rotation post 35 may be a structure such as a cylinder, a prism, a truncated cone, or the like. This is not limited. The limiting groove 14 is a blind hole. The anti-rotation post 35 extends into the limiting groove 14, and the cylinder body 33 extends into the first mounting hole 11, so that the insulation member 30 is limited. Fitting between the anti-rotation post 35 and the limiting groove 14 prevents the insulation member 30 from rotating around the cylinder body 33, which plays a role of positioning and limiting. The anti-rotation post 35 and the plate body 32 may be an integrated structure or split structures. This is not limited.

With reference to FIG. 1 to FIG. 4, an embodiment of the present disclosure further provides a battery apparatus, including a housing (not shown), a battery core (not shown), and the end cap assembly in any one of the foregoing embodiments. The housing includes an accommodating cavity. The battery core is accommodated in the accommodating cavity. The end cap assembly is connected to the housing and closes the accommodating cavity. The battery core is electrically connected to the connecting sheet 40 of the end cap assembly.

The housing may be a square housing, a cylindrical housing, a prismatic housing, or the like. This is not limited. The battery core may be a wound battery core, a laminated battery core, or the like. This is not limited. The battery core includes a tab. The tab is welded to the connecting sheet 40, to implement an electrical connection between the battery core and the connecting sheet 40. After the end cap assembly is assembled, the end cap assembly is aligned with and welded to the housing, so that a peripheral edge of the cover plate 10 of the end cap assembly is welded and fixed to the housing, and the end cap assembly closes the accommodating cavity.

An embodiment of the present disclosure further provides a power consumption device, including a power consumption apparatus and the battery apparatus in the embodiments of the present disclosure. The battery apparatus supplies power to the power consumption apparatus.

The power consumption apparatus may be specifically an industrial electric load, a commercial electric load, a household electric load, or the like. The power consumption apparatus may be specifically an electric vehicle, an energy storage tank, a base station, or the like. This is not limited.

In the descriptions of the embodiments of the present disclosure, it should be noted that, orientations or position relationships indicated by terms, such as "center", "up", "down", "left", "right", "vertical", "horizontal", "in", and "out", are orientations or position relationships shown based on the accompanying drawings, are merely for the convenience of describing the present disclosure and simplifying the descriptions, and are not intended to indicate or imply that an apparatus or element referred to needs to have a particular direction and be constructed and operated in a particular orientation, and therefore, cannot be understood as a limitation on the present disclosure.

The content disclosed above is merely preferred embodiments of the present disclosure, and is certainly not intended to limit the patent scope of the present disclosure. A person of ordinary skill in the art may understand all or some of the procedures for implementing the foregoing embodiments, and an equivalent variation made according to the claims of the present disclosure still falls within the scope of the present disclosure.

## Claims

1. An end cap assembly, comprising:
a cover plate, the cover plate being provided with a first mounting hole;
an adhesive member, the adhesive member being bonded to the cover plate, the adhesive member being provided with a second mounting hole, the second mounting hole corresponding to the first mounting hole; and
an insulation member, the insulation member being disposed on a side of the cover plate facing away from the adhesive member, the insulation member being provided with a third mounting hole, the third mounting hole corresponding to the first mounting hole,
wherein a thickness of the adhesive member is H1, and a thickness of the insulation member is H2, satisfying the following: H1<H2.

2. The end cap assembly according to claim 1, further satisfying: H2≤3H1.

3. The end cap assembly according to claim 1 or 2, wherein the cover plate comprises a first surface and a second surface facing away from each other, the first mounting hole runs through the first surface and the second surface, the adhesive member is disposed on the first surface, and the insulation member comprises a plate body and a cylinder body, an end of the cylinder body is connected to the plate body, the third mounting hole runs through the cylinder body and the plate body, the plate body is disposed on the second surface, and the cylinder body extends into the first mounting hole.

4. The end cap assembly according to claim 3, further comprising a terminal, the terminal comprising a disc body and a column body, an end of the column body being connected to the disc body, the column body passing through the first mounting hole, the second mounting hole, and the third mounting hole, and the disc body being bonded to a surface of the adhesive member facing away from the cover plate.

5. The end cap assembly according to claim 4, wherein at a same position in a radial direction of the first mounting hole, an outer peripheral edge of the adhesive member is flush with an outer peripheral edge of the disc body, or the adhesive member protrudes from the outer peripheral edge of the disc body.

6. The end cap assembly according to claim 4 or 5, wherein in a radial direction of the first mounting hole, a minimum dimension of the disc body is larger than a maximum dimension of the first mounting hole, the maximum dimension of the first mounting hole is larger than or equal to a maximum dimension of the cylinder body, the maximum dimension of the cylinder body is larger than a maximum dimension of the third mounting hole, and the maximum dimension of the third mounting hole is larger than or equal to a maximum dimension of the column body.

7. The end cap assembly according to any one of claims 4 to 6, wherein in a radial direction of the first mounting hole, a maximum dimension of the first mounting hole is larger than a maximum dimension of the second mounting hole, and the maximum dimension of the second mounting hole is larger than or equal to a maximum dimension of the column body.

8. The end cap assembly according to any one of claims 4 to 7, further comprising a connecting sheet, the connecting sheet being disposed on a side of the insulation member facing away from the cover plate, and an end of the column body away from the disc body being connected to the connecting sheet; and at a same position in a radial direction of the first mounting hole, an outer peripheral edge of the plate body protruding from an outer peripheral edge of the connecting sheet.

9. The end cap assembly according to claim 8, wherein the insulation member further comprises a limiting structure, the limiting structure is disposed on a surface of the plate body facing away from the cylinder body, and the connecting sheet is disposed in a space enclosed by the limiting structure.

10. The end cap assembly according to any one of claims 3 to 9, wherein the insulation member further comprises an anti-rotation post, the anti-rotation post is disposed on the plate body and disposed spaced away from the cylinder body, and the cylinder body and the anti-rotation post are located on a same side of the plate body, the second surface is provided with a limiting groove, and the anti-rotation post extends into the limiting groove.

11. The end cap assembly according to any one of claims 1 to 10, wherein the adhesive member is any one of a polypropylene adhesive member, a polyethersulfone adhesive member, or a polyamide adhesive member, and the insulation member is any one of a polypropylene insulation member, a polycarbonate insulation member, a polyethylene insulation member, or a polystyrene insulation member.

12. A battery apparatus, comprising a housing, a battery core, and the end cap assembly according to any one of claims 1 to 11, the housing comprising an accommodating cavity, the battery core being accommodated in the accommodating cavity, the end cap assembly being connected to the housing and closing the accommodating cavity, and the battery core being electrically connected to the connecting sheet of the end cap assembly.

13. A power consumption device, comprising a power consumption apparatus and the battery apparatus according to claim 12, the battery apparatus supplying power to the power consumption apparatus.
